# EUROPÄISCHE PATENTSCHRIFT

(11) **EP 2 745 945 B1**
(45) Veröffentlichungstag und Bekanntmachung des Hinweises auf die Patenterteilung: **13.09.2017**
(21) Anmeldenummer: 13075015.1
(22) Anmeldetag: 11.02.2013
(51) Int. Cl.: G01B 11/02, G01B 11/25, B21B 37/16, B21B 37/70

(54) **Verfahren und Vorrichtung zur berührungslosen geometrischen Vermessung eines blechförmigen Messobjektes**
Method and apparatus for non-contact geometric measurement of a sheet-like object to be measured
Procédé et dispositif destinés à la mesure géométrique sans contact d'un objet de mesure en forme de plaque

(30) Priorität: 20.12.2012 DE 102012003620
(43) Veröffentlichungstag der Anmeldung: 25.06.2014
(73) Patentinhaber: Salzgitter Mannesmann Grobblech GmbH, 45473 Mülheim (DE)
(72) Erfinder: Schönartz, Norbert, 47509 Rheurdt (DE); Deppe, Gerd-Joachim, 47809 Krefeld (DE); Siegel, Hans, 47053 Duisburg (DE); Rosenthal, Helge, 46537 Dinslaken (DE)
(74) Vertreter: Meissner, Peter E.

(56) Entgegenhaltungen:
- EP-A2- 0 289 084
- WO-A1-2011/142462
- GB-A- 1 271 990
- US-A1- 2010 302 554

## Beschreibung

Die Erfindung betrifft ein Verfahren zur berührungslosen geometrischen Vermessung eines Messobjektes, insbesondere blechförmiger Gegenstände, gemäß dem Oberbegriff des Patentanspruches 1. Unter blechförmigen Gegenständen werden im Folgenden z. B. Stahlbleche verstanden, die zur Herstellung von Stahlrohren nach dem bekannten UOE-Verfahren hergestellt werden. Hierbei wird das Stahlblech zunächst **U**- und dann **O**-förmig zu einem Schlitzrohr eingeformt. Die Bandkanten des so entstandenen Schlitzrohrs werden anschließend verschweißt und das fertige Rohr durch einen Expansionsvorgang auf Endmaß kalibriert.

Die Stahlbleche, die z. B. in einem Grobblechwalzwerk hergestellt werden, müssen vor der Weiterverarbeitung zu einem Rohr auf eine exakte dem späteren Rohrdurchmesser zugeordnete Breite zugeschnitten werden. Da die Blechkanten durch unterschiedliche Abkühlbedingungen andere Werkstoffeigenschaften als der restliche Blechquerschnitt aufweisen, müssen auftragsspezifisch bestimmte Mindestbreiten der Randstreifen abgeschnitten werden. Die Grobbleche werden deshalb stets mit einem entsprechenden Breitenübermaß gefertigt, so dass nach Abschneiden der Mindestbreite des Randstreifens die erforderliche Soll-Blechbreite auf jeden Fall eingehalten werden kann.

Eine typische Abmessung eines fertig zugeschnittenen Stahlbleches ist z. B. 24,5 mm x 4355 mm x 18350 mm, um ein Rohr mit einer Länge von 18,35 m und einem Durchmesser von 56" zu erzeugen. Die Blechdicken liegen bei UOE-Rohren typischerweise zwischen 7 und 45 mm.

Während die Rohrlänge fallweise auch nach der Fertigstellung auf ein exaktes Maß zugeschnitten werden kann, muss die Breite des Stahlbleches schon vor der Weiterverarbeitung exakt dem zu erreichenden Rohrdurchmesser entsprechen. Betriebliche Praxis ist es allerdings, das Blech auch in der Länge schon vor der Weiterverarbeitung auf ein exaktes Maß zu schneiden.

Um das Blech auf das vorbestimmte Breitenmaß exakt zuzuschneiden, werden die Blechkanten beispielsweise mit einer Doppelbesäumschere an den Längsseiten des Bleches beschnitten. Eine Schere ist dazu fest positioniert an einer Blechseite angeordnet, wohingegen die Schere an der gegenüber liegenden Blechseite in Breitenrichtung des Bleches zur Anpassung an unterschiedliche Blechbreiten verfahrbar angeordnet ist. Da das Blech nicht in einem Schnittvorgang über die Länge von z. B. 18 m mit der Schere besäumt werden kann, wird das Blech schrittweise über die Länge besäumt. Das Blech selbst liegt dabei üblicherweise auf einer Auflagefläche, wie z. B. auf einem Rollgang, auf nachfolgend als Auflage bezeichnet.

Vor der Besäumung wird dem Steuermann der Besäumschere die Sollbreite des Bleches z. B. über beidseitig auf die Längsseiten des Bleches fächerförmig projizierte Laserlinien als Referenz- bzw. Schnittlinien visuell angezeigt. Besäumscheren und projizierte Laserlinien fluchten jeweils miteinander. Der Steuermann muss das Blech längs der Referenzlinien auf dem Rollgang so ausrichten, dass die Besäumung etwa parallel zu den Blechlängskanten erfolgt und dass an beiden Längsseiten des Bleches die abzuschneidenden Mindestbreiten der Randstreifen eingehalten werden. Dazu ist der Rollgang so ausgelegt, dass das Blech quer verfahren oder fallweise auch in die richtige Lage gedreht werden kann.

Nachteilig ist bei diesem Verfahren, dass die Breiten der abzuschneidenden Randstreifen nur visuell erkennbar sind aber keine exakten dokumentierbaren Werteangaben vorliegen, auf deren Basis das Erreichen der Mindestbreiten der Randstreifen erkannt und das Blech entsprechend positioniert werden kann.

Aufgrund ungünstiger Sichtverhältnisse, z. B. wegen eines großen Abstands vom Steuerstand, schlechter Beleuchtung, und/oder eines geringen Kontrastes von Messobjekt und Untergrund ist eine exakte Positionierung des Bleches relativ zur projizierten Laserlinie oftmals schwierig. Dies gilt insbesondere bei bis zu 30 m langen Blech-Doppellängen. Zyklisch erfolgende manuelle Nachmessungen der Randstreifenbreiten sind zeitaufwändig, bei getakteten Produktionsprozessen nur schwer realisierbar und unter Qualitätssicherungsaspekten unzureichend. Werden die erforderlichen Mindestbreiten der abzutrennenden Randstreifen jedoch nicht eingehalten, ist das Blech nicht mehr für den jeweiligen Auftrag zu gebrauchen. Auch zu schmal geratene Bleche können oftmals für keinen anderen Auftrag eingesetzt werden, so dass die durch Verschnitt entstehenden Ausfallmengen hohe Kosten verursachen.

Der vorliegenden Erfindung liegt deshalb die Aufgabe zugrunde, ein einfach zu realisierendes Verfahren zur berührungslosen geometrischen Vermessung von blechförmigen Gegenständen anzugeben, mit dem die beschriebenen Nachteile überwunden werden, so dass eine exakte Positionierung des Bleches in der Besäumstation und die zuverlässige Einhaltung der Mindestbreiten der abzuschneidenden Randstreifen auch unter ungünstigen Sicht-/Kontrastverhältnissen im Betrieb ermöglicht wird.

Diese Aufgabe wird nach dem Oberbegriff in Verbindung mit den kennzeichnenden Merkmalen des Anspruches 1 gelöst. Vorteilhafte Weiterbildungen sind Gegenstand von Unteransprüchen.

Nach der Lehre der Erfindung wird zur berührungslosen geometrischen Vermessung des Bleches, mittels eines Lasers eine fächerförmige Laserlinie als Referenz- bzw. Schnittlinie parallel zu einer Seitenkante auf das Blech projiziert und gleichzeitig mittels eines zweiten oder des gleichen Lasers eine zweite fächerförmige Laserlinie orthogonal hierzu auf das Blech so projiziert, dass sich diese mit der ersten Laserlinie einerseits kreuzt und andererseits sich über die abzuschneidende Kante des Bleches hinaus bis auf eine Ebene unterhalb der Blechunterkante erstreckt, wobei mittels nur einer in Triangulationsanordnung oberhalb des Messobjektes in einem Abstand angeordneten Kamera zum Einen der Schnittpunkt zwischen erster und zweiter Laserlinie und zum Anderen den Versatzpunkt der zweiten Laserlinie beim Übergang von der Blechkante zur Auflage erfasst und mittels digitaler Bildverarbeitung aus dem zweidimensionalen Kamerabild die Ortskoordinaten von Schnitt- und Versatzpunkt berechnet und daraus die relative Breite des Randstreifens ermittelt wird, wobei mittels der abstandmessenden Funktion der Triangulationsanordnung eine Anpassung des Lateralmaßstabs der Breitenmessung im Kamerabild erfolgt und daraus der Absolutwert der Randstreifenbreite ermittelt und mit einem vorgegebenen Sollwert verglichen und angezeigt wird.

Ein solcher für den Vorgang des Besäumens relevanter Randbereich des Bleches, auf den die zuvor genannten beiden Laserlinien projiziert werden, wird jeweils von nur einer in Triangulationsanordnung oberhalb des Bleches in einem Abstand angebrachten 2D-Kamera erfasst.

Wesentlicher Kern der Erfindung ist, dass das aufgenommene Bild, wie unten näher erläutert, mit zwei grundsätzlich verschiedenen Methoden der digitalen Bildverarbeitung ausgewertet wird.

Die Position der Blechkante wird unter Ausnutzung der Triangulationsanordnung der Kamera bestimmt, sie ergibt sich aus dem Versatzpunkt der zweiten Laserlinie beim Übergang von der Blechoberfläche zur Auflagefläche. Die Blechkante stellt das eine Ende der Messstrecke für die Breite des Seitenstreifens dar, das andere Ende wird durch den Schnittpunkt von erster und zweiter Laserlinie gegeben. Dieser Schnittpunkt wird direkt mit Methoden der 2D-Bildverarbeitung aus dem aufgenommenen Kamerabild gewonnen. Eine Streckenmessung in einem zweidimensionalen Kamerabild, im vorliegenden Fall die Breitenmessung, erfordert für die Absolutangabe bekanntermaßen eine abstandsabhängige Maßstabskalibrierung der optischen Abbildung.

Die notwendige Abstandsinformation für die Breitenmessung im 2D-Bild wird aus der beschriebenen 3D-Kantenerfassung erhalten. Bei dem angewandten "Lichtschnittverfahren" kann die Höhendifferenz zwischen Blechoberfläche und Auflagefläche über die Triangulationsbeziehung aus der Größe des Versatzes ermittelt werden, bei aufliegendem Blech entspricht sie der Blechdicke.

Die Kombination von zwei grundsätzlich verschiedenen Methoden der digitalen Bildverarbeitung für die vorliegende Messaufgabe nämlich die Anwendung der abstandsmessende Funktion der Triangulationsanordnung (3D) zur Anpassung des Lateralmaßstabes der Breitenmessung im 2D-Bild stellt also den wesentlichen Kern der vorliegenden Erfindung dar.

Die im Rahmen der vorliegenden Erfindung betrachtete Lichtschnitt-Messung basiert in ihrer eindimensionalen Form auf der bekannten Punkttriangulation, bei der ein Laser und ein zeilenförmiger positionsempfindlicher Detektor den Triangulations-Sensor bilden. Laserstrahl-Achse und optische Achse des Detektors bzw. der Kamera spannen eine als "Normalebene" bezeichnete Ebene auf und stehen im Triangulations-Winkel zueinander. Üblicherweise stellt der Abstand des Messobjektes, im vorliegenden Fall das Blech, von dem aus Kamera und Laser gebildeten Messkopf die Messgröße dar. Bekannt ist dieses Verfahren z. B. aus der DE 40 37 383 A1.

Gegenüber der bekannten Methode der visuellen Kontrolle wird mit dem vorgeschlagenen Verfahren ein hohes Maß an Qualitätssicherung erreicht, da dem Steuermann an der Besäumschere nun exakte Angaben über die aktuelle Randstreifenbreiten vorliegen, so dass das Blech entsprechend den zu erreichenden Mindestwerten für die Randstreifenbreiten entsprechend positioniert werden kann. Mittels digitaler Bildverarbeitung können die von der Kamera aufgenommenen Bilder verarbeitet und daraus die Messwerte für die Randstreifenbreiten ermittelt werden.

Die von der Kamera aufgenommen Bilder können zusätzlich zur Unterstützung des Steuermanns zusammen mit den ermittelten Breitenwerten auf einem Monitor graphisch dargestellt werden.

In einer vorteilhaften Weiterbildung der Erfindung werden die ermittelten Messwerte dazu benutzt, bei Abweichungen zwischen Ist- und Sollwerten der Randstreifenbreiten an beiden Blechseiten die Position des Bleches zu den Referenz- bzw. Schnittlinien bis zum Erreichen der Mindestrandstreifenbreite an beiden Blechseiten unter Beachtung der zu erzielenden Blechbreite nachzusteuern oder nachzuregeln.

In einer weiteren Ausgestaltung der Erfindung wird mittels mehrerer in Abständen über die zu beschneidende Blechlänge ermittelter Randstreifenbreiten die Ausrichtung der Blechkante zur Schnittlinie ermittelt und angezeigt. Falls erforderlich, kann die Ausrichtung durch eine Drehung des Bleches auf der Auflagefläche korrigiert und optimiert werden.

Wie weiter oben ausgeführt, muss bei der Streifenbreitenbestimmung ein abstandsabhängiger Lateralmaßstab für die Berechnung der Absolutmaße angewendet werden.

Nach einer weiteren vorteilhaften Ausgestaltung der Erfindung wird dazu eine Selbstkalibrierung bzw. Überwachung des Messsystems bezüglich der Breitenmessung vorgenommen, die vorteilhaft nach Bedarf oder in periodischen Abständen erfolgt.

Dies geschieht dadurch, dass während oder zeitnah zu der Vermessung des Messobjektes in einer Ebene unterhalb der Blechunterkante zuvor eingebrachte Referenzkörper und ihre Topographien erfasst werden. Die Referenzkörper haben z. B. eine Topographie mit stufenförmiger Ausbildung, die aufgrund vorangegangener Maßbestimmungen bekannt ist.

Aus der Beziehung von bekannter zu jeweils gemessener Topographie der Referenzkörper kann der abstandsabhängige Lateralmaßstab für die Bestimmung der Randstreifenbreiten ermittelt werden. Dies kann ohne Kenntnis des jeweiligen absoluten Abstandes der Kamera zur Messobjektoberfläche erfolgen.

In der vorliegenden Triangulationsanordnung wird dann bei einer aktuellen Breitenmessung auf der Blechoberseite der Umrechnungsfaktor für den Absolutanschluss gemäß der jeweiligen Höhendifferenz zwischen Referenzkörper und Blechoberseite entsprechend angepasst.

Anhand der im Anhang dargestellten Figuren wird die Erfindung nachfolgend näher beschrieben.

Es zeigen:
- **Figur 1**: eine schematische Darstellung der Lichtschnittanordnung des erfindungsgemäßen Verfahrens,
- **Figur 2**: eine perspektivische Detaildarstellung der projizierten Laserlinien aus Figur 1,
- **Figur 3**: eine schematische Darstellung des Kamerabildes auf einem Monitor.

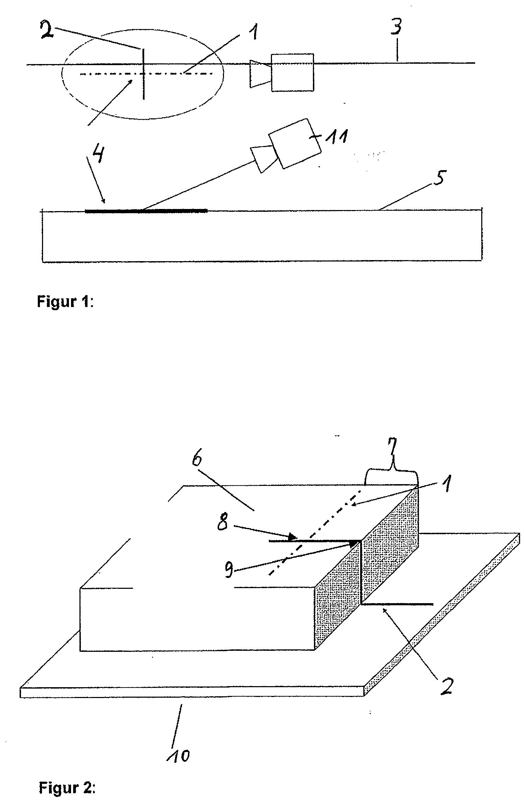

**Figur 1** zeigt in einer schematischen Darstellung die Lichtschnittanordnung des erfindungsgemäßen Verfahrens.

Die Draufsicht (**Figur 1** oben) auf das Messobjekt (Blech) zeigt die von einem hier nicht dargestellten Laser orthogonal auf das Blech 6 projizierten Laserlinien 1 und 2. Die Laserlinie 1 ist fächerförmig auf die Blechoberseite 5 projiziert und parallel zur Blechseitenkante 2 so ausgerichtet, dass der abzuschneidende Randstreifen 7 auf dem Blech 6 optisch erkennbar ist.

Die Laserlinie 2 ist ebenfalls fächerförmig auf die Blechoberseite 5 projiziert aber orthogonal so zur Laserlinie 1 ausgerichtet, dass sich einerseits die Laserlinien 1 und 2 schneiden und andererseits die Laserlinie 2 über die Blechkante bis auf die Auflagefläche 10 (s. **Figur 2**) hinausragt. Erfindungsgemäß werden Laserlinie 1 und Laserlinie 2 von zwei Lasern erzeugt, oder ein Laser ist mit einer Kreuzlinienoptik versehen, so dass mit nur einem Laser beide Laserlinien gleichzeitig auf das Messobjekt projiziert werden können. Desweiteren werden erfindungsgemäß mit nur einer Kamera 11 beide Laserlinien gleichzeitig erfasst und ausgewertet.

Wie in der Seitenansicht in **Figur 1** (unten) dargestellt, ist die Kamera 11 in Triangulationsanordnung erfindungsgemäß oberhalb des Bleches 6 so positioniert, dass diese sowohl die Laserlinie 1 wie auch die Laserlinie 2 erfasst, so dass wie in **Figur 2** dargestellt, bei "Lichtschnittbetrachtung" ein Schnittpunkt 8 der beiden Laserlinien und ein Versatzpunkt 9 am Übergang von der oberen Blechkante zu einer Ebene unterhalb der Blechunterkante von der Kamera 11 optisch dargestellt wird.

Nicht dargestellt in **Figur 2** sind die in die Auflagefläche 10 (Referenzfläche) in definierten Abständen eingebrachten Referenzmarkierungen, mit denen bei der Vermessung des Bleches eine Überwachung bzw. Selbstkalibrierung des Messsystems erfolgen kann.

Das von der Kamera aufgenommene Bild kann vorteilhaft zusätzlich zur beschriebenen automatischen Bildauswertung auf einem Monitor dargestellt werden, was ebenfalls für den Steuermann eine deutliche ergonomische Verbesserung zur bisherigen Verfahrensweise darstellt.

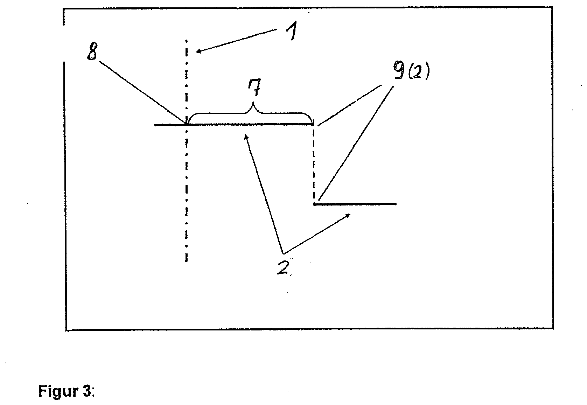

**Figur 3** zeigt beispielhaft eine solche Darstellung des Kamerabildes auf einem Monitorschirm in schematischer Form. Zu erkennen sind die Laserlinien 1 und 2 sowie der Schnittpunkt 8 von Laserlinie 1 und 2 und der Versatzpunkt 9 am Übergang Blechkante/Auflagerfläche aus dessen Abstand zueinander die Randstreifenbreite 7 ermittelt und ebenfalls angezeigt werden kann.

## Patentansprüche

1. Verfahren zur berührungslosen geometrischen Vermessung von blechförmigen Gegenständen (6) als Messobjekte, auf einer Auflage (10), die auf ein vorbestimmtes Breitenmaß zugeschnitten werden sollen, wobei eine Mindestbreite des abzuschneidenden Randstreifens einzuhalten ist,
**dadurch gekennzeichnet,**
**dass** zur Vermessung des Messobjektes mittels eines Lasers eine fächerförmige Laserlinie (1) als Referenz- bzw. Schnittlinie parallel zu einer Seitenkante auf das Blech projiziert und gleichzeitig mittels eines zweiten oder des gleichen Lasers eine zweite fächerförmige Laserlinie (2) orthogonal hierzu auf das Blech so projiziert, dass sich diese mit der ersten Laserlinie einerseits kreuzt und andererseits sich über die abzuschneidende Kante des Bleches hinaus bis auf eine Ebene unterhalb der Blechunterkante erstreckt, wobei mittels nur einer in Triangulationsanordnung oberhalb des Messobjektes in einem Abstand angeordneten Kamera (11) zum Einen der Schnittpunkt (8) zwischen erster (1) und zweiter (2) Laserlinie und zum Anderen den Versatzpunkt (9) der zweiten Laserlinie beim Obergang von der Blechkante zur Auflage (10) erfasst und mittels digitaler Bildverarbeitung aus dem zweidimensionalen Kamerabild die Ortskoordinaten von Schnitt- und Versatzpunkt berechnet und daraus die relative Breite des Randstreifens ermittelt wird, wobei mittels der abstandmessenden Funktion der Triangulationsanordnung eine Anpassung des Lateralmaßstabs der Breitenmessung im Kamerabild erfolgt und daraus der Absolutwert der Randstreifenbreite (7) ermittelt und mit einem vorgegebenen Sollwert verglichen und angezeigt wird.

2. Verfahren nach Anspruch 1,
**dadurch gekennzeichnet,**
**dass** mittels mehrerer in Abständen über die zu beschneidende Blechlänge ermittelter Randstreifenbreiten die Blechkante in Bezug zur Schnittlinie ausgerichtet wird.

3. Verfahren nach Anspruch 1 und 2,
**dadurch gekennzeichnet,**
**dass** die Vermessung und Auswertung automatisiert erfolgen.

4. Verfahren nach den Ansprüchen 1 bis 3
**dadurch gekennzeichnet,**
**dass** bei Abweichungen zwischen Ist- und Sollwerten der Randstreifenbreiten an beiden Blechseiten die Position des Bleches zu den Referenz- bzw. Schnittlinien bis zum Erreichen der Mindestrandstreifenbreiten an beiden Blechseiten unter Beachtung der zu erzielenden Blechbreite nachgesteuert oder nachgeregelt wird.

5. Verfahren nach mindestens einem der Ansprüche 1 bis 4
**dadurch gekennzeichnet,**
**dass** während oder im unmittelbaren Anschluss zur Vermessung des Messobjektes eine Selbstkalibrierung des Messsystems in der Art vorgenommen wird, dass in einer Ebene unterhalb der Blechunterkante zuvor eingebrachte Referenzkörper mit einer aufgrund vorangegangener Maßbestimmungen bekannten Topographie erfasst werden und aus der Beziehung von bekannter zu gemessener Topographie der Referenzkörper der abstandsabhängige Lateralmaßstab für die Bestimmung der Randstreifenbreiten ohne Kenntnis des jeweiligen absoluten Abstandes der Kamera zur Messobjektoberfläche ermittelt wird.

6. Verfahren nach Anspruch 5
**dadurch gekennzeichnet,**
**dass** Referenzkörper mit einer stufenförmigen Topographie eingesetzt werden.

## Claims

1. Method for contactless geometric measurement of sheet-like objects (6) as measurement objects on a support (10), which objects are intended to be cut to a specified width, it being necessary to adhere to a minimum width of the edge strip to be cut off,
**characterised in that**,
in order to measure the measurement object, a laser projects a fan-shaped laser line (1) onto the sheet in parallel with a lateral edge as a reference or cutting line and at the same time a second or the same laser projects a second fan-shaped laser line (2) onto the sheet orthogonally to the first laser line such that said second line intersects the first laser line and extends beyond the edge of the sheet that is to be cut off, as far as a plane below the lower edge of the sheet, both the intersection point (8) of the first (1) and second (2) laser line and the point of offset (9) of the second laser line at the transition between the sheet edge and the support (10) being detected by just one camera (11) that is arranged in a triangulation arrangement above the measurement object and so as to be at a distance therefrom, and the location coordinates of the intersection point and the point of offset being calculated from the two-dimensional camera image by means of digital image processing, and the relative width of the edge strip being determined therefrom, the distance-measuring function of the triangulation arrangement adjusting the lateral scale of the width measurement in the camera image, and the absolute value of the edge strip width (7) being determined therefrom and being compared with a specified target value and displayed.

2. Method according to claim 1,
**characterised in that**,
the sheet edge is oriented relative to the cutting line using a plurality of edge strip widths determined at intervals along the sheet length to be trimmed.

3. Method according to claims 1 and 2,
**characterised in that**,
the measurement and evaluation are carried out automatically.

4. Method according to claims 1 to 3,
**characterised in that**,
in the event of deviations between actual and target values of the edge strip widths on both sides of the sheet, the position of the sheet relative to the reference or cutting lines is readjusted, taking account of the sheet width to be achieved, until the minimum edge strip widths are reached on both sides of the sheet.

5. Method according to at least one of claims 1 to 4,
**characterised in that**,
during or immediately following the measurement of the measurement object, self-calibration of the measuring system is carried out such that reference bodies that have been previously introduced in a plane below the lower edge of the sheet and have a topography that is known on account of preceding determinations of dimension are detected, and the distance-dependent lateral scale for determining the edge strip widths is calculated from the relationship between the known and the measured topography of the reference bodies, without knowledge of the absolute distance between the camera and the measurement object surface in each case.

6. Method according to claim 5,
**characterised in that**
reference bodies having a step-like topography are used.

## Revendications

1. Procédé de mesure géométrique sans contact d'objets (6) en forme de plaque en tant qu'objets de mesure sur un support (10), lesquels doivent être découpés sur une cote de largeur prédéfinie, dans lequel une largeur minimale de la bande de bord à découper doit être observée,
**caractérisé en ce**
**qu'**aux finis de la mesure de l'objet de mesure au moyen d'un laser, une ligne laser (1) en forme d'éventail est projetée sur la plaque en tant que ligne de référence ou de coupe de manière parallèle par rapport à une arête latérale et, de manière simultanée, une deuxième ligne laser (2) en forme d'éventail est projetée sur la plaque de manière orthogonale au moyen d'un deuxième ou du même laser de sorte que la deuxième ligne laser croise d'une part la première ligne laser et s'étend d'autre part au-delà de l'arête à découper de la plaque jusque sur un plan en dessous de l'arrête inférieure de plaque, dans lequel d'une part le point d'intersection (8) entre la première (1) et la deuxième (2) ligne laser et d'autre part le point de décalage (9) de la deuxième ligne laser lors du passage de l'arête de plaque au support (10) sont détectés au moyen seulement d'une caméra (11) disposée à une distance donnée dans un ensemble de triangulation au-dessus de l'objet de mesure et les coordonnées spatiales du point d'intersection et de décalage sont calculées au moyen d'un traitement d'images numérique à partir de l'image de caméra bidimensionnelle et la largeur relative de la bande de bord est déterminée sur cette base, dans lequel une adaptation de l'échelle latérale de la mesure de largeur est effectuée dans l'image de caméra au moyen de la fonction de mesure de distance de l'ensemble de triangulation et la valeur absolue de la largeur de bande de bord (7) est déterminée sur cette base et est comparée à une valeur théorique spécifiée et est affichée.

2. Procédé selon la revendication 1,
**caractérisé en ce**
**que** l'arête de plaque est orientée par rapport à la ligne de coupe au moyen de plusieurs largeurs de bande de bord déterminées à des intervalles donnés sur la longueur de plaque à découper.

3. Procédé selon la revendication 1 et 2,
**caractérisé en ce**
**que** la mesure et l'évaluation sont effectuées de manière automatisée.

4. Procédé selon les revendications 1 à 3,
**caractérisé en ce**
**qu'**en cas d'écarts entre des valeurs réelles et des valeurs théoriques des largeurs de bande de bord au niveau des deux côtés de plaque, la position de la plaque par rapport aux lignes de référence ou de coupe est commandée ou régulée ultérieurement jusqu'à ce que les largeurs de bande de bord minimales au niveau des deux côtés de plaque soient atteintes en respectant la largeur de plaque à atteindre.

5. Procédé selon au moins l'une quelconque des revendications 1 à 4,
**caractérisé en ce**
**qu'**est effectué, au cours ou immédiatement après la mesure de l'objet de mesure, un étalonnage automatique du système de mesure tel que des corps de référence introduits au préalable dans un plan en dessous de l'arête inférieure de plaque, présentant une topographie connue du fait de cotes définies antérieurement sont détectés et que l'échelle latérale dépendant de la distance est déterminée à partir du rapport entre des topographies connues à mesurer des corps de référence en vue de la définition des largeurs de bande de bord sans connaissance de la distance respectivement absolue de la caméra par rapport à la surface d'objet de mesure.

6. Procédé selon la revendication 5,
**caractérisé en ce**
**que** des corps de référence présentant une topographie de forme étagée sont employés .
